# EUROPEAN PATENT SPECIFICATION

(11) **EP 4 134 390 B1**
(45) Date of publication and mention of the grant of the patent: **18.06.2025**
(21) Application number: 21783817.6
(22) Date of filing: 02.04.2021
(51) Int. Cl.: C08G 65/336, C08K 5/5419, C08K 5/5435, C09K 3/18, C08L 71/02, C08K 3/36, C08K 5/544, C04B 41/00, C04B 41/49, C04B 41/64, C04B 111/27

(54) **CURABLE COMPOSITION**
HÄRTBARE ZUSAMMENSETZUNG
COMPOSITION DURCISSABLE

(30) Priority: 09.04.2020 JP 2020070592
(43) Date of publication of application: 15.02.2023
(73) Proprietor: Kaneka Corporation, Osaka-shi, Osaka 530-8288 (JP)
(72) Inventor: SMITS, Wendy, Westerlo-Oevel (BE); HARUMASHI, Tatsuro, Westerlo-Oevel (BE)
(74) Representative: Vossius & Partner Patentanwälte Rechtsanwälte mbB
(86) International application number: PCT/JP2021/014374
(87) International publication number: WO 2021/206026

(56) References cited:
- WO-A1-2012/057281
- WO-A1-2014/192914
- JP-A- 2013 525 529
- JP-A- 2014 510 816
- JP-A- 2015 508 419
- JP-A- 2019 014 885

## Description

### Technical Field

The present invention relates to a curable composition containing a hydrolyzable silyl group-containing polyoxyalkylene polymer.

### Background Art

Polymers having hydrolyzable silyl groups are known as moisture-reactive polymers. Curable compositions containing these polymers are used as many kinds of industrial products, such as adhesives, sealing materials, coating materials, paints, and pressure-sensitive adhesives, in diverse fields.

Polymer backbones known as those of the polymers having hydrolyzable silyl groups include various kinds of polymers such as polyoxyalkylene polymers, saturated hydrocarbon polymers, and (meth)acrylic ester copolymers. In particular, a polyoxyalkylene polymer has a relatively low viscosity at room temperature and is easy to handle. Further, a cured product resulting from a reaction of the polyoxyalkylene polymer exhibits good elasticity. By virtue of these and other features, the polyoxyalkylene polymer can be used in a wide range of applications.

Additives are added to a curable composition containing a hydrolyzable silyl group-containing polyoxyalkylene polymer to impart various physical properties to the composition. Patent Literatures 1 and 2 disclose a curable composition containing a hydrolyzable silyl group-containing polyoxyalkylene polymer, silica, and a compound resulting from partial condensation of silyl groups of an aminosilane alone or partial condensation of the aminosilane with an alkoxysilane compound other than aminosilanes. Patent Literatures 3 and 4 disclose a curable composition containing a hydrolyzable silyl group-containing polyoxyalkylene polymer, silica, and a long-chain alkylsilane.

### Citation List

### Patent Literature

PTL 1: Japanese Laid-Open Patent Application Publication (Translation of PCT Application) No. 2015-508419
PTL 2: Japanese Laid-Open Patent Application Publication No. 2019-014885
PTL 3: Japanese Laid-Open Patent Application Publication (Translation of PCT Application) No. 2013-525529
PTL 4: Japanese Laid-Open Patent Application Publication No. 2014-043519

### Summary of Invention

### Technical Problem

An object of the present invention is to provide a curable composition that exhibits improved water-resistant adhesion to concrete without application of any primer and that forms into a cured product with a low water absorption rate.

### Solution to Problem

As a result of intensive studies aimed at solving the above problem, the present inventors have completed the following invention.

That is, the present invention relates to
(1). a curable composition containing: a hydrolyzable silyl group-containing polyoxyalkylene polymer (A); silica (B); a silane compound (C) containing an alkyl group having four or more carbon atoms; and a compound (D) resulting from partial condensation of silyl groups of an aminosilane alone or partial condensation of the aminosilane with an alkoxysilane compound other than aminosilanes.
(2). The present invention relates to the curable composition according to (1), further containing an epoxysilane (E).
(3). The present invention relates to the curable composition according to (1) or (2), wherein the silane compound (C) containing an alkyl group having four or more carbon atoms is a silane compound containing an alkyl group having seven or more carbon atoms.
(4). The present invention relates to the curable composition according to any one of (1) to (3), wherein the hydrolyzable silyl group-containing polyoxyalkylene polymer (A) has a hydrolyzable silyl group represented by the following formula (1):

   -Si(R¹)₃₋ₐ(X)ₐ (1),

   wherein
   each R¹ independently represents a hydrocarbon group having 1 to 10 carbon atoms and optionally having a heteroatom-containing group or a halogen atom as a substituent, each X independently represents a hydroxy group or a hydrolyzable group, and a represents 1, 2, or 3.
(5). The present invention relates to the curable composition according to (4), wherein a represents 3.
(6). The present invention relates to the curable composition according to any one of (1) to (5), wherein the aminosilane has a hydrolyzable silyl group.
(7). The present invention relates to the curable composition according to any one of (1) to (6), wherein the hydrolyzable silyl group-containing polyoxyalkylene polymer (A) has a number-average molecular weight of 3,000 to 50,000.
(8). The present invention relates to the curable composition according to any one of (1) to (7), containing 10 to 300 parts by weight of the silica (B), 0.5 to 20 parts by weight of the silane compound (C) containing an alkyl group having four or more carbon atoms, and 0.5 to 20 parts by weight of the compound (D) resulting from partial condensation of silyl groups of an aminosilane alone or partial condensation of the aminosilane with an alkoxysilane compound other than aminosilanes, per 100 parts by weight of the hydrolyzable silyl group-containing polyoxyalkylene polymer (A).
(9). The present invention relates to a cured product obtained by curing the curable composition according to any one of (1) to (8).
(10). The present invention relates to a waterproofing coating material for concrete, containing the curable composition according to any one of (1) to (8).

### Advantageous Effects of Invention

The present invention can provide a curable composition that exhibits improved water-resistant adhesion to concrete without application of any primer and that forms into a cured product with a low water absorption rate.

### Description of Embodiments

Hereinafter, an embodiment of the present invention will be described.

The present invention relates to a curable composition containing: a hydrolyzable silyl group-containing polyoxyalkylene polymer (A); silica (B); a silane compound (C) containing an alkyl group having four or more carbon atoms; and a compound (D) resulting from partial condensation of silyl groups of an aminosilane alone or partial condensation of the aminosilane with an alkoxysilane compound other than aminosilanes.

By virtue of containing the components (B), (C), and (D), the curable composition according to the present invention exhibits improved water-resistant adhesion to concrete without application of any primer. Additionally, a cured product obtained from the curable composition has a low water absorption rate.

### <<Hydrolyzable Silyl Group-Containing Polyoxyalkylene Polymer (A)>>

The curable composition contains a "hydrolyzable silyl group-containing polyoxyalkylene polymer (A)" (also referred to as "polymer (A)" hereinafter).

The number-average molecular weight of the polymer (A), as determined by GPC as a polystyrene equivalent molecular weight, is preferably from 1,000 to 50,000, more preferably from 2,000 to 30,000, and particularly preferably from 3,000 to 30,000. When the number-average molecular weight is 1,000 or more, the amount of the reactive silicon groups introduced is appropriately controlled, and this is advantageous in terms of production cost. When the number-average molecular weight is 50,000 or less, the polymer has a low viscosity, which is advantageous in terms of workability.

The molecular weight of the polymer (A) can be expressed also as a terminal group equivalent molecular weight. The terminal group equivalent molecular weight is determined as follows: before introduction of hydrolyzable silyl groups, an organic polymer precursor is subjected to titration analysis based on the principles of the hydroxy value measurement method as specified in JIS K 1557 and the iodine value measurement method as specified in JIS K 0070 to directly measure the terminal group concentration, from which the terminal group equivalent molecular weight is calculated taking into account the architecture of the organic polymer (in particular, the degree of branching which depends on the polymerization initiator used).

The polymer (A) is not limited to having a particular molecular weight distribution (Mw/Mn), but preferably has a narrow molecular weight distribution in order to achieve a low viscosity. Mw/Mn is preferably less than 2.0, more preferably 1.6 or less, even more preferably 1.4 or less, and particularly preferably 1.3 or less. Mw/Mn is preferably 1.2 or less in terms of improving various mechanical properties such as increasing the durability and elongation of a cured product. The molecular weight distribution of the hydrolyzable silyl group-containing polyoxyalkylene polymer (A) can be determined from the number-average molecular weight and weight-average molecular weight obtained by GPC analysis.

### <Hydrolyzable Silyl Group>

The hydrolyzable silyl group of the polymer (A) is preferably represented by the following formula (1).

-Si(R¹)₃₋ₐ(X)ₐ (1)

In the formula (1), each R¹ independently represents a hydrocarbon group having 1 to 10 carbon atoms and optionally having a heteroatom-containing group or a halogen atom as a substituent, each X independently represents a hydroxy group or a hydrolyzable group, and a represents 1, 2, or 3.

Examples of R¹ include: alkyl groups such as methyl and ethyl groups; cycloalkyl groups; aryl groups; aralkyl groups; halogenated methyl groups such as a chloromethyl group; and alkoxymethyl groups such as a methoxymethyl group. Methyl, chloromethyl, and methoxymethyl groups are preferred, and a methyl group is more preferred.

Examples of X include a hydroxy group, halogens, and alkoxy, acyloxy, ketoximate, amino, amide, acid amide, aminooxy, mercapto, and alkenyloxy groups. Among these, alkoxy groups such as methoxy and ethoxy groups are preferred in terms of moderate hydrolyzability and ease of handling. More preferred are methoxy and ethoxy groups.

The letter a represents 1, 2, or 3, and is preferably 2 or 3 and more preferably 3.

Specific examples of the hydrolyzable silyl group include trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (methoxymethyl)dimethoxysilyl, and (N,N-diethylaminomethyl)dimethoxysilyl groups. Among these, trimethoxysilyl, triethoxysilyl, dimethoxymethylsilyl, and (methoxymethyl)dimethoxysilyl groups are preferred.

The number of the hydrolyzable silyl groups per molecule of the polymer (A) is preferably 0.5 or more, more preferably 1.0 or more, and even more preferably 1.2 or more on average. As for the upper limit, the number is preferably 4 or less and more preferably 3 or less.

A polymer having a plurality of hydrolyzable silyl groups in one terminal structure can also be used as the polymer (A). A typical example of such a terminal structure is represented by the following formula (2).

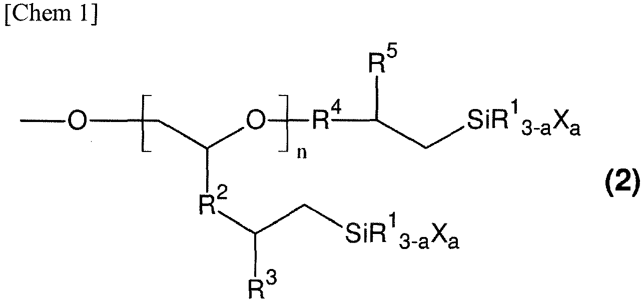

In the formula (2), R² represents a direct bond or a divalent hydrocarbon group having 1 to 4 carbon atoms, R³ represents hydrogen or an alkyl group having 1 to 6 carbon atoms, R⁴ represents a direct bond or a divalent linkage group having 1 to 6 carbon atoms, R⁵ represents hydrogen or a hydrocarbon group having 1 to 6 carbon atoms, and n is an integer of 1 to 10. The leftmost oxygen represents oxygen present in a repeating unit located at an end of a polymer backbone composed of a plurality of repeating units linked together or oxygen bonded to the repeating unit located at the end of the polymer backbone. R¹, X, and a are as defined above for the formula (1).

R² is preferably a hydrocarbon group having 1 to 3 carbon atoms and more preferably a hydrocarbon group having 1 to 2 carbon atoms. The hydrocarbon group is preferably an alkylene group. Examples of the alkylene group include methylene, ethylene, propylene, and butylene groups. A methylene group is particularly preferred.

R³ is preferably hydrogen or an alkyl group having 1 to 4 carbon atoms and more preferably hydrogen or an alkyl group having 1 to 3 carbon atoms. Examples of the alkyl group include methyl, ethyl, propyl, and butyl groups. R³ is preferably hydrogen, a methyl group, or an ethyl group, more preferably hydrogen or a methyl group, and even more preferably hydrogen.

R⁴ may be a divalent organic group having 1 to 6 carbon atoms. The organic group is preferably a hydrocarbon group or an oxygen atom-containing hydrocarbon group. The number of carbon atoms is preferably from 1 to 4, more preferably from 1 to 3, and even more preferably 1 or 2. R⁴ is preferably -CH₂OCH₂-, -CH₂O-, or -CH₂- and more preferably -CH₂OCH₂-.

R⁵ is preferably hydrogen or a hydrocarbon group having 1 to 5 carbon atoms, more preferably hydrogen or a hydrocarbon group having 1 to 3 carbon atoms, and even more preferably hydrogen or a hydrocarbon group having 1 to 2 carbon atoms. Hydrogen or a methyl group is particularly preferred, and hydrogen is most preferred.

### <Main Chain Structure>

The main chain structure of the polymer (A) may be linear or branched.

The main chain of the polymer (A) is preferably a polymer having a repeating unit represented by -R⁶-O-. R⁶ preferably represents a linear or branched alkylene group having 1 to 14 carbon atoms and more preferably represents a linear or branched alkylene group having 2 to 4 carbon atoms. Specific examples of the repeating unit represented by -R⁶-O- include -CH₂O-, -CH₂CH₂O-, -CH₂CH(CH₃)O-, -CH₂C(CH₃)(CH₃)O-, and -CH₂CH₂CH₂CH₂O-.

The polymer (A) may have any one of various main chain structures as described above or may be a mixture of two or more types of polymers having different main chain structures.

### <Synthesis Methods>

Preferred methods of synthesizing the polymer (A) include: (i) a method in which an epoxy compound is polymerized with a hydroxy group-containing initiator using a double metal cyanide complex catalyst to obtain a hydroxy-terminated polyoxyalkylene polymer, then hydroxy groups of the obtained hydroxy-terminated polyoxyalkylene polymer are converted to unsaturated carbon-carbon groups, and finally a hydrosilane compound is added to the polymer through a hydrosilylation reaction; (ii) a method in which an epoxy compound is polymerized with a hydroxy group-containing initiator using a double metal cyanide complex catalyst to obtain a hydroxy-terminated polyoxyalkylene polymer, and then the obtained hydroxy-terminated polyoxyalkylene polymer is reacted with a compound having both a hydroxy-reactive group and a hydrolyzable silyl group; and (iii) a method in which a hydroxy-terminated polyoxyalkylene polymer is reacted with an excess amount of polyisocyanate compound to obtain a polymer having terminal isocyanate groups, and then the obtained polymer is reacted with a compound having both an isocyanate-reactive group and a hydrolyzable silyl group.

Examples of the hydroxy group-containing initiator used in the methods (i) and (ii) include compounds or polymers having one or more hydroxy groups, such as ethylene glycol, propylene glycol, glycerin, pentaerythritol, low-molecular-weight polypropylene glycol, polyoxypropylene triol, allyl alcohol, methanol, ethanol, propanol, butanol, pentanol, hexanol, polypropylene monoallyl ether, and polypropylene monoalkyl ether.

Examples of the epoxy compound used in the methods (i) and (ii) include: alkylene oxides such as ethylene oxide and propylene oxide; and glycidyl ethers such as methyl glycidyl ether and allyl glycidyl ether. Among these, propylene oxide is preferred.

Examples of the unsaturated carbon-carbon group used in the method (i) include vinyl, allyl, methallyl, and propargyl groups. Among these, an allyl group is preferred.

A preferred way of converting the hydroxy groups to the unsaturated carbon-carbon groups in the method (i) is to allow an alkali metal salt to act on the hydroxy-terminated polymer and then react the resulting polymer with a halogenated hydrocarbon compound having an unsaturated carbon-carbon bond.

Examples of the halogenated hydrocarbon compound used in the method (i) include vinyl chloride, allyl chloride, methallyl chloride, propargyl chloride, vinyl bromide, allyl bromide, methallyl bromide, propargyl bromide, vinyl iodide, allyl iodide, methallyl iodide, and propargyl iodide.

Examples of the hydrosilane compound used in the method (i) include trimethoxysilane, triethoxysilane, tris(2-propenyloxy)silane, triacetoxysilane, dimethoxymethylsilane, (chloromethyl)dimethoxysilane, (methoxymethyl)dimethoxysilane, and (N,N-diethylaminomethyl)dimethoxysilane.

The hydrosilylation reaction used in the method (i) can be accelerated by a hydrosilylation catalyst. Any known catalyst may be used as the hydrosilylation catalyst. Examples of the catalyst include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinylsiloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄.

Examples of compounds that can be used as the compound having both a hydroxy-reactive group and a hydrolyzable silyl group in the method (ii) include: isocyanatosilanes such as 3-isocyanatopropyltrimethoxysilane, 3-isocyanatopropyldimethoxymethylsilane, 3-isocyanatopropyltriethoxysilane, isocyanatomethyltrimethoxysilane, isocyanatomethyltriethoxysilane, and isocyanatomethyldimethoxymethylsilane; mercaptosilanes such as 3-mercaptopropyltrimethoxysilane, 3-mercaptopropyldimethoxymethylsilane, and 3-mercaptopropyltriethoxysilane; and epoxysilanes such as 3-glycidoxypropyltrimethoxysilane, 3-glycidoxypropyldimethoxymethylsilane, and 3-glycidoxypropyltriethoxysilane.

Examples of polyisocyanate compounds that can be used in the method (iii) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of compounds that can be used as the compound having both an isocyanate-reactive group and a hydrolyzable silyl group in the method (iii) include amino group-containing silanes such as γ-aminopropyltrimethoxysilane, γ-aminopropyldimethoxymethylsilane, γ-aminopropyltriethoxysilane, N-(β-aminoethyl)-γ-aminopropyltrimethoxysilane, N-(β-aminoethyl)-γ-aminopropyldimethoxymethylsilane, N-(β-aminoethyl)-γ-aminopropyltriethoxysilane, γ-(N-phenyl)aminopropyltrimethoxysilane, γ-(N-phenyl)aminopropyldimethoxymethylsilane, N-ethylaminoisobutyltrimethoxysilane, N-ethylaminoisobutyldimethoxymethylsilane, N-cyclohexylaminomethyltrimethoxysilane, and N-cyclohexylaminomethyldimethoxymethylsilane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

A polyoxyalkylene polymer having a plurality of hydrolyzable silyl groups in one terminal structure as represented by the formula (2) can also be used as the polymer (A). Examples of the method of synthesizing such a polyoxyalkylene polymer include a method in which: an epoxy compound is polymerized with a hydroxy group-containing initiator using a double metal cyanide complex catalyst to obtain a hydroxy-terminated polyoxyalkylene polymer; an alkali metal salt is then allowed to act on hydroxy groups of the obtained hydroxy-terminated polyoxyalkylene polymer; the resulting polymer is reacted with allyl glycidyl ether; an alkali metal salt is allowed to act on the terminal hydroxy groups formed by the reaction with allyl glycidyl ether; the resulting polymer is reacted with a halogenated hydrocarbon compound having an unsaturated carbon-carbon bond to obtain a polyoxyalkylene polymer having a plurality of unsaturated carbon-carbon groups in one terminal structure; and finally a hydrosilane compound is added to the polyoxyalkylene polymer through a hydrosilylation reaction.

### <<Silica (B)>>

The curable composition according to the present embodiment contains silica (B). The inclusion of the silica (B) leads to improved water-resistant adhesion of the curable composition to concrete.

Examples of the silica (B) include wet silica such as precipitated silica, dry silica such as fumed silica, crystalline silica, molten silica, silicic anhydride, and hydrated silicic acid. Among these, crystalline silica is preferred.

The specific surface area (BET adsorption method) of the silica (B) is preferably from 0.1 to 10 m²/g and more preferably from 0.5 to 5 m²/g.

The median diameter (D50) of the silica (B) is preferably from 1 to 50 µm, more preferably from 2 to 30 µm, and even more preferably from 5 to 20 µm.

The content of the silica (B) is preferably from 10 to 400 parts by weight, more preferably from 30 to 300 parts by weight, and even more preferably 50 to 250 parts by weight per 100 parts by weight of the polymer (A). When the content of the silica (B) is 10 parts by weight or more, the water-resistant adhesion of the curable composition to concrete can be further improved. When the content of the silica (B) is 400 parts by weight or less, a cured product obtained from the curable composition can have better mechanical properties.

### <<Silane Compound (C) Containing Alkyl Group Having Four or More Carbon Atoms>>

The curable composition according to the present embodiment contains a "silane compound (C) containing an alkyl group having four or more carbon atoms" (also referred to as "silane compound (C)" hereinafter). The inclusion of the silane compound (C) leads to improved water-resistant adhesion of the curable composition to concrete and makes it possible to obtain a cured product with a low water absorption rate.

The silane compound (C) contains an alkyl group having four or more carbon atoms, and the alkyl group is present on a silicon atom. The alkyl group is preferably an alkyl group having six or more carbon atoms, more preferably an alkyl group having seven or more carbon atoms, and even more preferably an alkyl group having eight or more carbon atoms. The upper limit of the number of carbon atoms in the alkyl group is not limited to a particular value. The number of carbon atoms may be, for example, 20 or less and is preferably 18 or less. The alkyl group in the silane compound (C) may be branched, but is preferably a linear alkyl group.

Specific examples of the alkyl group having four or more carbon atoms include butyl, pentyl, hexyl, heptyl, octyl, decyl, undecyl, dodecyl, tridecyl, tetradecyl, cetyl, octadecyl, eicosyl, butenyl, pentenyl, hexenyl, heptenyl, octenyl, nonenyl, decenyl, dodecenyl, tetradecenyl, hexadecenyl, octadecenyl, eicocenyl, octadecadienyl, 9,12,15-octadecatrienyl, and 9,11,13-octadecatrienyl groups.

Among these, butyl, pentyl, hexyl, heptyl, octyl, decyl, undecyl, dodecyl, tridecyl, tetradecyl, and octadecyl groups are preferred, and octyl, decyl, undecyl, dodecyl, tridecyl, tetradecyl, and octadecyl groups are more preferred.

The silane compound (C) preferably has a hydrolyzable silyl group. Examples of the hydrolyzable silyl group include those previously mentioned as examples of the hydrolyzable silyl group of the polymer (A).

Specific examples of the silane compound (C) include n-butyltrimethoxysilane, n-pentyltrimethoxysilane, n-hexyltrimethoxysilane, n-heptyltrimethoxysilane, n-octyltrimethoxysilane, n-decyltrimethoxysilane, n-dodecyltrimethoxysilane, n-octadecyltrimethoxysilane, n-butyltriethoxysilane, n-pentyltriethoxysilane, n-hexyltriethoxysilane, n-heptyltriethoxysilane, n-octyltriethoxysilane, n-dodecyltriethoxysilane, n-octadecyltriethoxysilane, n-butylmethyldimethoxysilane, n-pentylmethyldimethoxysilane, n-hexylmethyldimethoxysilane, n-heptylmethyldimethoxysilane, n-octylmethyldimethoxysilane, n-dodecylmethyldimethoxysilane, n-octadecylmethyldimethoxysilane, n-octylmethyldiethoxysilane, 1,8-bis(trimethoxysilyl)octane, 1,12-bis(trimethoxysilyl)dodecane, 1,8-bis(triethoxysilyl)octane, 1,12-bis(triethoxysilyl)dodecane, and 1,8-bis(methyldimethoxysilyl)octane.

Among these, n-heptyltrimethoxysilane, n-octyltrimethoxysilane, n-decyltrimethoxysilane, n-dodecyltrimethoxysilane, n-octadecyltrimethoxysilane, n-heptyltriethoxysilane, n-octyltriethoxysilane, n-dodecyltriethoxysilane, n-octadecyltriethoxysilane, n-heptylmethyldimethoxysilane, n-octylmethyldimethoxysilane, n-dodecylmethyldimethoxysilane, and n-octadecylmethyldimethoxysilane are preferred, and n-octyltrimethoxysilane, n-decyltrimethoxysilane, n-dodecyltrimethoxysilane, and n-octadecyltrimethoxysilane are more preferred.

The content of the silane compound (C) is preferably from 0.5 to 20 parts by weight, more preferably from 1 to 15 parts by weight, and even more preferably from 5 to 12 parts by weight per 100 parts by weight of the polymer (A). When the content of the silane compound (C) is 0.5 parts by weight or more, the water-resistant adhesion of the curable composition to concrete can be further improved, and the water absorption rate of a cured product obtained from the curable composition can be further lowered. When the content of the silane compound (C) is 20 parts by weight or less, the curable composition can have higher curability.

### <<Compound (D) Resulting from Partial Condensation of Silyl Groups of Aminosilane alone or Partial Condensation of Aminosilane with Alkoxysilane Compound>>

The curable composition according to the present embodiment contains a "compound (D) resulting from partial condensation of silyl groups of an aminosilane alone or partial condensation of the aminosilane with an alkoxysilane compound other than aminosilanes" (also referred to as "silane compound (D)" hereinafter). The inclusion of the silane compound (D) leads to improved water-resistant adhesion of the curable composition to concrete.

The silane compound (D) includes a "silane compound (D1) resulting from partial condensation of silyl groups of an aminosilane alone" (also referred to as "silane compound (D1)" hereinafter), a "silane compound (D2) resulting from partial condensation of an aminosilane compound with an alkoxysilane compound other than aminosilanes" (also referred to as "silane compound (D2)" hereinafter), or both.

One aminosilane or a combination of two or more aminosilanes may be used to give the silane compound (D1). The aminosilane used to give the silane compound (D1) is preferably an aminosilane having a hydrolyzable silyl group. The hydrolyzable silyl group is preferably represented by the formula (1) described above. The silane compound (D1) is preferably a product of partial condensation between hydrolyzable silyl groups of a hydrolyzable silyl group-containing aminosilane compound.

One aminosilane or a combination of two or more aminosilanes may be used to give the silane compound (D2). The aminosilane used to give the silane compound (D2) is preferably an aminosilane having a hydrolyzable silyl group. The hydrolyzable silyl group is preferably represented by the formula (1) described above. One alkoxysilane compound other than aminosilanes or a combination of two or more alkoxysilane compounds other than aminosilanes may be used to give the silane compound (D2). The silane compound (D2) is preferably a compound resulting from partial condensation of hydrolyzable silyl groups of a hydrolyzable silyl group-containing aminosilane compound with alkoxy groups of the alkoxysilane compound.

The silane compound (D) is preferably a compound resulting from partial condensation between those hydrolyzable silyl groups of a hydrolyzable silyl group-containing aminosilane compound which are represented by the formula (1) or a compound resulting from partial condensation of those hydrolyzable silyl groups of a hydrolyzable silyl group-containing aminosilane compound which are represented by the formula (1) with alkoxy groups of the alkoxysilane compound other than aminosilanes.

Examples of the aminosilane include N-2-aminoethyl-3-aminopropyltrimethoxysilane, N-2-aminoethyl-3-aminopropyltriethoxysilane, N-2-aminoethyl-3-aminopropylmethyldimethoxysilane, 3-aminopropyltrimethoxysilane, 3-aminopropyltriethoxysilane, 3-aminopropylmethyldimethoxysilane, 3-aminopropylmethyldiethoxysilane, N-phenyl-3-aminopropyltrimethoxysilane, N-phenyl-1-aminomethyltriethoxysilane, and N-n-butyl-3-aminopropyltrimethoxysilane. One of these aminosilanes may be used, or two or more thereof may be used in combination.

Examples of the alkoxysilane compound other than aminosilanes include: (a) hydrocarbon group-containing silanes such as methyltrimethoxysilane, methyltriethoxysilane, dimethyldimethoxysilane, dimethyldiethoxysilane, ethyltriethoxysilane, n-propyltrimethoxysilane, n-propyltriethoxysilane, hexyl trimethoxysilane, hexyltriethoxysilane, octyltriethoxysilane, decyltrimethoxysilane, phenyltrimethoxysilane, phenyltriethoxysilane, and methyltriacetoxysilane; (b) silicate compounds such as tetramethyl orthosilicate (tetramethoxysilane or methyl silicate), tetraethyl orthosilicate (tetraethoxysilane or ethyl silicate), tetrapropyl orthosilicate, and tetrabutyl orthosilicate; (c) epoxy group-containing silanes such as 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane, and 2-(3,4-epoxycyclohexyl)ethyltriethoxysilane; (d) vinyl-type unsaturated group-containing silanes such as vinyltrimethoxysilane, vinyltriethoxysilane, 3-methacryloyloxypropyltrimethoxysilane, 3-methacryloyloxypropylmethyldimethoxysilane, 3-acryloxypropyltrimethoxysilane, and methacryloyloxymethyltrimethoxysilane; (e) mercapto group-containing silanes such as 3-mercaptopropyltrimethoxysilane, 3-mercaptopropyltriethoxysilane, 3-mercaptopropylmethyldimethoxysilane, 3-mercaptopropylmethyldiethoxysilane, mercaptomethyltrimethoxysilane, and mercaptomethyltriethoxysilane; (f) isocyanurate silanes such as 1,3,5-tris(3-trimethoxysilylpropyl)isocyanurate; and (g) products of partial hydrolysis-condensation of the above silanes. One of these alkoxysilane compounds may be used, or two or more thereof may be used in combination.

Commercially-available examples of the silane compound (D) include: X-40-2651 (manufactured by Shin-Etsu Chemical Co., Ltd.); MS3301 and MS3302 (manufactured by JNC Corporation); and Dynasylan 1146, Dynasylan VPS SIVO 260, and Dynasylan VPS SIVO 280 (manufactured by Evonik Industries).

The content of the silane compound (D) is preferably from 0.5 to 20 parts by weight and more preferably from 1 to 10 parts by weight per 100 parts by weight of the polymer (A). When the content of the silane compound (D) is 0.5 parts by weight or more, the water-resistant adhesion of the curable composition to concrete can be further improved. When the content of the silane compound (D) is 20 parts by weight or less, a cured product obtained from the curable composition can have better mechanical properties.

### <<Epoxysilane (E)>>

The curable composition according to the present embodiment may contain an epoxysilane (E). The inclusion of the epoxysilane (E) leads to a further improvement in the water-resistant adhesion of the curable composition to concrete and makes it possible to obtain a cured product with a low water absorption rate.

The epoxysilane (E) is not limited to a particular compound and may be any silane coupling agent having an epoxy group. Specific examples of the epoxysilane (E) include γ-glycidoxypropyldimethylethoxysilane, γ-glycidoxypropylmethyldimethoxysilane, γ-glycidoxypropylmethyldiethoxysilane, γ-glycidoxypropyltrimethoxysilane, γ-glycidoxypropyltriethoxysilane, β-(3,4-epoxycyclohexyl)ethylmethyltrimethoxysilane, β-(3,4-epoxycyclohexyl)ethylmethyldimethoxysilane, an epoxy group-modified silicone resin, a silyl group-modified epoxy resin, and a copolymer composed of an epoxy resin and a silicone resin.

Among these, γ-glycidoxypropyltrimethoxysilane and γ-glycidoxypropylmethyldiethoxysilane are preferred.

Commercially-available examples of the epoxysilane (E) include: γ-glycidoxypropylmethyldiethoxysilane (KBE402, manufactured by Shin-Etsu Chemical Co., Ltd.); γ-glycidoxypropyltrimethoxysilane (Dynasylan GLYMO, manufactured by Evonik Industries); SH6040 (manufactured by Dow Coming Toray Co., Ltd.); and SILQUESTA-187 and TSL8350 (both of which are manufactured by Momentive Performance Materials Japan LLC.)

The content of the epoxysilane (E) is not limited to a particular range, but is preferably from 0.1 to 20 parts by weight and more preferably from 0.5 to 10 parts by weight per 100 parts by weight of the polymer (A).

### <<Additional Components>>

The curable composition according to the present embodiment may contain additional components in addition to the polymer (A), silica (B), silane compound (C), silane compound (D), and epoxysilane (E), and examples of the additional components include a silanol condensation catalyst, a filler other than the component (B), an adhesion promoter other than the components (D) and (E), a plasticizer, an anti-sagging agent, an antioxidant, a light stabilizer, an ultraviolet absorber, a property modifier, a tackifying resin, a photocurable material, an oxygen-curable material, an epoxy resin, and another resin.

Furthermore, the curable composition according to the present embodiment may, if desired, contain various additives for the purpose of adjusting the physical properties of the curable composition or a cured product of the composition. Examples of the additives include a surface modifier, a foaming agent, a curability modifier, a flame retardant, a silicate, a radical inhibitor, a metal deactivator, an antiozonant, a phosphorus-based peroxide decomposer, a lubricant, a pigment, and a fungicide.

### <Silanol Condensation Catalyst>

The curable composition may contain a silanol condensation catalyst for the purpose of accelerating the hydrolysis and condensation reaction of the hydrolyzable silyl groups of the polymer (A) and increasing the chain length of the polymer or crosslinking the polymer.

Examples of the silanol condensation catalyst include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin diketanoate, dioctyltin oxide, a reaction product of dibutyltin oxide and a silicate compound, a reaction product of dioctyltin oxide and a silicate compound, and a reaction product of dibutyltin oxide and a phthalic ester.

Specific examples of the metal carboxylate include tin carboxylate, bismuth carboxylate, titanium carboxylate, zirconium carboxylate, and iron carboxylate. The metal carboxylate may be a combination of any of the carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-o-tolylbiguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Examples of other silanol condensation catalysts which can be used include fluorine anion-containing compounds, photoacid generators, and photobase generators.

Two or more different silanol condensation catalysts may be used in combination.

The amount of the silanol condensation catalyst used is preferably from 0.001 to 20 parts by weight, more preferably from 0.01 to 15 parts by weight, and particularly preferably from 0.01 to 10 parts by weight per 100 parts by weight of the polymer (A).

### <Filler>

The curable composition according to the present embodiment may contain various fillers other than the silica (B). Examples of the fillers include heavy calcium carbonate, colloidal calcium carbonate, magnesium carbonate, diatomite, clay, talc, titanium oxide, carbon black, ferric oxide, aluminum fines, zinc oxide, activated zinc oxide, PVC powder, PMMA powder, and glass fibers or filaments.

The amount of the filler used is preferably from 1 to 300 parts by weight and particularly preferably from 10 to 250 parts by weight per 100 parts by weight of the polymer (A).

An organic or inorganic balloon may be added to reduce the weight (or reduce the specific gravity) of the composition. The balloon is a spherical filler whose interior is hollow, and examples of the material of the balloon include: inorganic materials such as glass and Shirasu soil; and organic materials such as phenol resin, urea resin, polystyrene, and Saran.

The amount of the balloon used is preferably from 0.1 to 100 parts by weight and particularly preferably from 1 to 20 parts by weight per 100 parts by weight of the polymer (A).

### <Adhesion Promoter>

An adhesion promoter other than the silane compound (D) and epoxysilane (E) can be added to the curable composition according to the present embodiment.

A silane coupling agent or a reaction product of the silane coupling agent can be added as the adhesion promoter.

Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-7-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; and mercapto group-containing silanes such as γ-mercaptopropyltrimethoxysilane, γ-mercaptopropyltriethoxysilane, and γ-mercaptopropylmethyldimethoxysilane.

One of the above adhesion promoters may be used alone, or two or more thereof may be mixed and used. Reaction products of the various silane coupling agents can also be used.

The amount of the silane coupling agent used is preferably from 0.1 to 20 parts by weight and particularly preferably from 0.5 to 10 parts by weight per 100 parts by weight of the polymer (A).

### <Plasticizer>

A plasticizer can be added to the curable composition according to the present embodiment. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic acid phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil, benzyl epoxystearate, bis(2-ethylhexyl)-4,5-epoxycyclohexane-1,2-dicarboxylate (E-PS), epoxy octyl stearate, and epoxy butyl stearate.

A polymeric plasticizer can also be used. Specific examples of the polymeric plasticizer include: vinyl polymers; polyester plasticizers; polyethers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene.

The amount of the plasticizer used is preferably from 5 to 150 parts by weight, more preferably from 10 to 120 parts by weight, and particularly preferably from 20 to 100 parts by weight per 100 parts by weight of the polymer (A). One plasticizer may be used alone, or two or more plasticizers may be used in combination.

### <Anti-Sagging Agent>

An anti-sagging agent may be added, if desired, to the curable composition according to the present embodiment to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the polymer (A).

### <Antioxidant>

An antioxidant (anti-aging agent) can be used in the curable composition according to the present embodiment. The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are mentioned in Japanese Laid-Open Patent Application Publication No. H4-283259 and Japanese Laid-Open Patent Application Publication No. H9-194731.

The amount of the antioxidant used is preferably from 0.1 to 10 parts by weight and particularly preferably from 0.2 to 5 parts by weight per 100 parts by weight of the polymer (A).

### <Light Stabilizer>

A light stabilizer can be used in the curable composition according to the present embodiment. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer is preferably from 0.1 to 10 parts by weight and particularly preferably from 0.2 to 5 parts by weight per 100 parts by weight of the polymer (A).

### <Ultraviolet Absorber>

An ultraviolet absorber can be used in the curable composition according to the present embodiment. The use of an ultraviolet absorber can increase the surface weathering resistance of the cured product. Examples of the ultraviolet absorber include benzophenone, benzotriazole, salicylate, substituted acrylonitrile, and metal chelate compounds. Particularly preferred are benzotriazole compounds, examples of which include those sold under the trade names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and particularly preferably from 0.2 to 5 parts by weight per 100 parts by weight of the polymer (A).

### <Property Modifier>

A property modifier may be added, if desired, to the curable composition of the present invention for the purpose of modifying the tensile properties of the resulting cured product. Examples of the property modifier include, but are not limited to: alkylalkoxysilanes such as phenoxytrimethylsilane, methyltrimethoxysilane, dimethyldimethoxysilane, and trimethylmethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present embodiment or conversely decrease the hardness and increase the elongation at break. One of the above property modifiers may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and particularly preferably from 0.5 to 5 parts by weight per 100 parts by weight of the polymer (A).

### <Tackifying Resin>

A tackifying resin can be added, if desired, to the curable composition of the present invention for the purpose of increasing the bond strength or adhesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the polymer (A).

### <Photocurable Material>

A photocurable material can be used in the curable composition according to the present embodiment. The use of a photocurable material can lead to the formation of a coating of the photocurable material on the surface of the cured product, resulting in reduction in stickiness of the cured product or increase in weathering resistance of the cured product. A wide variety of such compounds are known, including organic monomers, oligomers, resins, and compositions containing them. Typical examples of photocurable materials which can be used include: an unsaturated acrylic compound which is a monomer or an oligomer having one or more unsaturated acrylic or methacrylic groups or a mixture of the monomer and oligomer; polyvinyl cinnamates; and azide resins.

The photocurable material is preferably used in an amount of 0.1 to 20 parts by weight, more preferably 0.5 to 10 parts by weight, per 100 parts by weight of the polymer (A).

### <Oxygen-Curable Material>

An oxygen-curable material can be used in the curable composition according to the present embodiment. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material used is preferably from 0.1 to 20 parts by weight and more preferably from 0.5 to 10 parts by weight per 100 parts by weight of the polymer (A). It is recommended that the oxygen-curable material be used in combination with a photocurable material as taught in Japanese Laid-Open Patent Application Publication No. H3-160053.

### <Epoxy Resin>

An epoxy resin can also be used in the curable composition according to the present embodiment. The composition containing an added epoxy resin is preferred especially for use as an adhesive, in particular an adhesive for exterior wall tiles. Examples of the epoxy resin include bisphenol A epoxy resins and novolac epoxy resins.

As for the ratio between the epoxy resin used and the polymer (A), the polymer (A)/epoxy resin weight ratio is preferably from 100/1 to 1/100. When the polymer (A)/epoxy resin weight ratio is 1/100 or more, the improving effect on the impact resistance or toughness of a cured product of the epoxy resin is likely to be obtained. When the polymer (A)/epoxy resin weight ratio is 100/1 or less, the strength of a cured product of the composition can be high.

When the epoxy resin is added to the curable composition according to the present embodiment, a curing agent for curing the epoxy resin can also be used in the composition. The epoxy resin-curing agent used is not limited to a particular material, and may be a commonly used epoxy resin-curing agent.

When a curing agent for curing the epoxy resin is used, the amount of the curing agent is preferably from 0.1 to 300 parts by weight per 100 parts by weight of the epoxy resin.

### <<Preparation of Curable Composition>>

The curable composition of the present invention can be prepared as a one-part composition all the components of which are blended together and hermetically stored and which, when applied to any object, cures under the action of moisture in the air. The curable composition of the present invention can be prepared also as a two-part composition consisting of an organic polymer composition and a curing agent blend which is prepared separately from the organic polymer composition by blending components such as a curing catalyst, a filler, a plasticizer, and water. In the case of this two-part composition, the organic polymer composition and the blend are mixed before use. In terms of workability, the curable composition of the present invention is preferably prepared as a one-part composition.

In the case where the curable composition is a one-part composition, all the components are blended together beforehand. Thus, it is preferable that a water-containing component be dried to remove water before use or dehydrated by a manipulation such as pressure reduction during blending or kneading. The storage stability of the composition can be further improved by not only performing the drying/dehydration process but also adding a dehydrating agent, in particular an alkoxysilane compound such as n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

In the case of using a dehydrating agent, in particular a water-reactive silicon compound such as vinyltrimethoxysilane, the amount of the compound used as the dehydrating agent is preferably from 0.1 to 20 parts by weight and more preferably from 0.5 to 10 parts by weight per 100 parts by weight of the polymer (A).

### <<Applications>>

The curable composition according to the present embodiment can be used as a sealing material, an adhesive, a waterproofing coating material, a pressure-sensitive adhesive, a paint, or a mold making material. In particular, the curable composition is preferably used as a sealing material, an adhesive, or a waterproofing coating material and more preferably used as a waterproofing coating material. It is particularly preferable to use the curable composition as a waterproofing coating material for concrete. The term "waterproofing coating material for concrete" refers to a material for forming a waterproofing coating on the surface of concrete. The curable composition according to the present embodiment can be applied directly to the surface of concrete without application of any primer.

### Examples

Hereinafter, the present invention will be described in more detail using examples. The present invention is not limited to the examples given below.

### (Number-Average Molecular Weight)

In the examples, the number-average molecular weights are GPC molecular weights measured under the following conditions.
Delivery system: HLC-8220 GPC manufactured by Tosoh Corporation
Column: TSKgel SuperH series manufactured by Tosoh Corporation
Solvent: THF
Molecular weight: Polystyrene equivalent
Measurement temperature: 40°C

### (Average Number of Introduced Silyl Groups)

In the examples, the values of the average number of silyl groups introduced per polymer end or per polymer molecule were calculated by NMR analysis.

### (Synthesis Example 1)

Propylene oxide was polymerized using polyoxypropylene glycol having a number-average molecular weight of about 4,500 as an initiator in the presence of a zinc hexacyanocobaltate-glyme complex catalyst. This polymerization yielded polyoxypropylene (P-1) terminated at both ends by hydroxy groups and having a number-average molecular weight of 27,500 and a polydispersity index Mw/Mn of 1.26. Subsequently, 1.0 molar equivalents of sodium methoxide dissolved in methanol at a concentration of 28% was added per molar equivalent of the hydroxy groups of the hydroxy-terminated polyoxypropylene (P-1). Methanol was distilled off by evaporation under vacuum, then 1.0 molar equivalents of allyl glycidyl ether was added per molar equivalent of the hydroxy groups of the polymer (P-1), and the reaction was allowed to proceed at 130°C for 2 hours. After that, 0.28 molar equivalents of sodium methoxide dissolved in methanol was added, then methanol was removed, and 1.8 molar equivalents of allyl chloride was added to convert the terminal hydroxy groups to allyl groups. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-1) having a plurality of unsaturated carbon-carbon bonds at polymer ends was obtained. The polymer (Q-1) was found to have 2.0 introduced unsaturated carbon-carbon bonds on average per polymer end.

To 500 g of the obtained polymer (Q-1) was added 50 µl of a solution of a platinum-divinyldisiloxane complex (isopropanol solution with a concentration of 3% by weight calculated as the platinum content), and then 9.6 g of dimethoxymethylsilane was slowly added dropwise under stirring. The resulting liquid mixture was reacted at 100°C for 2 hours, after which dimethoxymethylsilane remaining unreacted was distilled off under reduced pressure to obtain polyoxypropylene (A-1) having a plurality of dimethoxymethylsilyl groups at polymer ends and having a number-average molecular weight of 28,200. The polymer (A-1) was found to have 1.7 dimethoxymethylsilyl groups on average per polymer end and 3.4 dimethoxymethylsilyl groups on average per polymer molecule.

### (Synthesis Example 2)

Propylene oxide was polymerized using polyoxypropylene glycol having a number-average molecular weight of about 4,500 as an initiator in the presence of a zinc hexacyanocobaltate-glyme complex catalyst. This polymerization yielded polyoxypropylene (P-2) terminated at both ends by hydroxy groups and having a number-average molecular weight of 14,300 and a polydispersity index Mw/Mn of 1.21. Subsequently, 1.2 molar equivalents of sodium methoxide dissolved in methanol at a concentration of 28% was added per molar equivalent of the hydroxy groups of the hydroxy-terminated polyoxypropylene (P-2). Methanol was distilled off by evaporation under vacuum, and then 1.5 molar equivalents of allyl chloride was added per molar equivalent of the hydroxy groups of the polymer (P-2) to convert the terminal hydroxy groups to allyl groups. Allyl chloride remaining unreacted was removed by evaporation under reduced pressure. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-2) having allyl groups at polymer ends was obtained. To 500 g of the polymer (Q-2) was added 50 µl of a solution of a platinum-divinyldisiloxane complex (isopropanol solution with a concentration of 3% by weight calculated as the platinum content), and then 13.5 g of trimethoxysilane was slowly added dropwise under stirring. The resulting liquid mixture was reacted at 100°C for 2 hours, after which trimethoxysilane remaining unreacted was distilled off under reduced pressure to obtain polyoxypropylene (A-2) having trimethoxysilyl groups at polymer ends and having a number-average molecular weight of 14,600. The polymer (A-2) was found to have 0.8 trimethoxysilyl groups on average per polymer end and 1.5 trimethoxysilyl groups on average per polymer molecule.

### (Example 1)

To 100 parts by weight of the polymer (A-1) described in Synthesis Example 1 were added 75 parts by weight of DINP (manufactured by ExxonMobil: diisononyl phthalate), 100 parts by weight of Sibelite M3000 (manufactured by Sibelco Speciality Minerals: silica with a median diameter (D50) of 17 µm and a specific surface area (BET adsorption method) of 1.5 m²/g), 200 parts by weight of Imerseal 36S (manufactured by Imerys: heavy calcium carbonate), 1.7 parts by weight of Eversorb HP1 (manufactured by Everlight Chemical: light stabilizer), 3 parts by weight of Eversorb HP4 (manufactured by Everlight Chemical: light stabilizer), 1 part by weight of Irganox 245FF (manufactured by BASF: [ethylene bis(oxyethylene)] bis[3-(3-tert-butyl-4-hydroxy-5-methylphenyl)propionate), 5 parts by weight of Dynasylan VTMO (manufactured by Evonik Industries: vinyltrimethoxysilane), 3.2 parts by weight of Dynasylan 1146 (manufactured by Evonik Industries: diaminosilane-containing silane oligomer), 9 parts by weight of Dynasylan OCTMO (manufactured by Evonik Industries: trimethoxyoctylsilane), and 4 parts by weight of TIB KAT223 (manufactured by TIB Chemicals: dioctyltin diketanoate). The mixture was thoroughly stirred with a spatula and then further stirred and defoamed uniformly using a planetary mixer to obtain a curable composition. Water-resistant adhesion evaluation and water absorption rate measurement of the curable composition were conducted as described below. The results are listed in Table 1.

### (Water-Resistant Adhesion Evaluation)

The curable composition obtained as above was applied to a concrete substrate (manufactured by Rocholl: conforming with ISO 13640 Method 1, 71 × 12 × 25 mm) and cured at a temperature of 23°C and a relative humidity of 50% for 7 days, after which the substrate with the cured product was immersed in water for 7 days. After the substrate with the cured product was taken out of water, the cured product was subjected to a 90° hand peel test, and the adhesion was evaluated based on the cohesive failure rate at the adhesive interface (water-resistant adhesion evaluation 1).

Additionally, after the substrate with the cured product was taken out of water as described above, the cured product was further aged at a temperature of 23°C and a relative humidity of 50% for 3 days. The aged cured product was subjected to the same hand peel test to evaluate the adhesion (water-resistant adhesion evaluation 2). The results are listed in Table 1. The evaluation criteria are as follows.
A: Cohesive failure rate of 80% or more
B: Cohesive failure rate of 50 to less than 80%
C: Cohesive failure rate of 5 to less than 50%
D: Adhesive failure rate of 100%

### (Water Absorption Rate)

The curable composition obtained as above was used to prepare a 2-mm-thick sheet, which was aged at 23°C for 3 days and then at 50°C for 4 days. Two samples with a size of 5 × 5 cm were cut out of the aged sheet. The two samples were weighed and then immersed in water at 23°C for 4 weeks. After the samples were taken out of water, water was removed from the surfaces of the samples with paper, and then the weight of each sample was measured. The water absorption rate [(weight of sample as measured after water immersion - weight of sample as measured before water immersion)/weight of sample as measured before water immersion × 100] was determined for each sample, and the average of the water absorption rates of the two samples was calculated.

### (Example 2)

Evaluations were conducted in the same manner as in Example 1, except that the amount of Dynasylan OCTMO was changed to 7 parts by weight and 2 parts by weight of Dynasylan GLYMO (manufactured by Evonik Industries: 3-(2,3-epoxypropoxy)propyl)trimethoxysilane) was added. The results are listed in Table 1.

### (Example 3)

Evaluations were conducted in the same manner as in Example 1, except that the polymer (A-2) described in Synthesis Example 2 was used instead of the polymer (A-1), the amount of Dynasylan OCTMO was changed to 7 parts by weight, the amount of TIB KAT223 was changed to 0.5 parts by weight, and 2 parts by weight of Dynasylan GLYMO was added. The results are listed in Table 1.

### (Comparative Example 1)

Evaluations were conducted in the same manner as in Example 2, except that Socal U1S2 (manufactured by Imerys: precipitated calcium carbonate) was added instead of Sibelite M3000. The results are listed in Table 1.

### (Comparative Example 2)

Evaluations were conducted in the same manner as in Example 1, except that Dynasylan 1146 was not added and the amount of Dynasylan GLYMO was changed to 5.2 parts by weight. The results are listed in Table 1.

### (Comparative Example 3)

Evaluations were conducted in the same manner as in Example 1, except that Dynasylan OCTMO was not added. The results are listed in Table 1.

**[Table 1]**

| | | Example 1 | Example 2 | Example 3 | Comp. Example 1 | Comp. Example 2 | Comp. Example 3 |
|---|---|---|---|---|---|---|---|
| Polymer (A) | A-1 | 100 | 100 | | 100 | 100 | 100 |
| | A-2 | | | 100 | | | |
| Plasticizer | DINP | 75 | 75 | 75 | 75 | 75 | 75 |
| Silica (B) | Sibelite M3000 | 100 | 100 | 100 | | 100 | 100 |
| Calcium carbonate | Socal U1S2 | | | | 100 | | |
| | Imerseal 36S | 200 | 200 | 200 | 200 | 200 | 200 |
| Light stabilizer | Eversorb HP-1 | 1.7 | 1.7 | 1.7 | 1.7 | 1.7 | 1.7 |
| | Eversorb HP-4 | 3 | 3 | 3 | 3 | 3 | 3 |
| Antioxidant | Irganox 245FF | 1 | 1 | 1 | 1 | 1 | 1 |
| Dehydrating agent | Dynasylan VTMO | 5 | 5 | 5 | 5 | 5 | 5 |
| Silane compound (C) | Dynasylan OCTMO | 9 | 7 | 7 | 7 | 7 | |
| Silane compound (D) | Dynasylan 1146 | 3.2 | 3.2 | 3.2 | 3.2 | | 3.2 |
| Epoxysilane (E) | Dynasylan GLYMO | | 2 | 2 | 2 | 5.2 | |
| Catalyst | TIB KAT223 | 4 | 4 | 0.5 | 4 | 4 | 4 |
| Water-resistant adhesion evaluation (hand peel) | Water-resistant adhesion evaluation 1 | C | C | A | D | D | D |
| | Water-resistant adhesion evaluation 2 | A | A | A | D | D | D |
| Water absorption rate after 4-week immersion (%) | | 2.2 | 2.1 | 2.0 | 2.7 | 2.1 | 3.3 |

Table 1 reveals that Comparative Examples 1 to 3, in which any one of the silica (B), silane compound (C), and silane compound (D) was not contained, showed an adhesive failure rate of 100% in all of the water-resistant adhesion evaluations, while Examples 1 to 3, in which all of the silica (B), silane compound (C), and silane compound (D) were contained, exhibited cohesive failure indicative of improved water-resistant adhesion. It is also seen that Examples 1 to 3 showed similar or lower water absorption rates than Comparative Examples 1 to 3.

### (Example 4)

To 100 parts by weight of the polymer (A-1) described in Synthesis Example 1 were added 75 parts by weight of DINP, 150 parts by weight of Sibelite M3000, 150 parts by weight of Imerseal 36S, 1.7 parts by weight of Eversorb HP-1, 3 parts by weight of Eversorb HP-4, 1 part by weight of Irganox 245FF, 5 parts by weight of Dynasylan VTMO, 5.2 parts by weight of Dynasylan 1146, 7 parts by weight of Dynasylan OCTMO, and 4 parts by weight of TIB KAT223. The mixture was thoroughly stirred with a spatula and then further stirred and defoamed uniformly using a planetary mixer to obtain a curable composition. The obtained curable composition was used to conduct the same evaluations as in Example 1. The results are listed in Table 2.

### (Example 5)

Evaluations were conducted in the same manner as in Example 4, except that the amount of Dynasylan 1146 was changed to 3.2 parts by weight and the amount of Dynasylan OCTMO was changed to 9 parts by weight. The results are listed in Table 2.

### (Comparative Example 4)

Evaluations were conducted in the same manner as in Example 4, except that Dynasylan 1146 was replaced with Dynasylan DAMO (manufactured by Evonik Industries: N-(3-(trimethoxysilyl)propyl ethylenediamine). The results are listed in Table 2.

### (Comparative Example 5)

Evaluations were conducted in the same manner as in Example 5, except that Dynasylan 1146 was replaced with Dynasylan DAMO. The results are listed in Table 2.

**[Table 2]**

| | | Example 4 | Example 5 | Comp. Example 4 | Comp. Example 5 |
|---|---|---|---|---|---|
| Polymer (A) | A-1 | 100 | 100 | 100 | 100 |
| Plasticizer | DINP | 75 | 75 | 75 | 75 |
| Silica (B) | Sibelite M3000 | 150 | 150 | 150 | 150 |
| Calcium carbonate | Imerseal 36S | 150 | 150 | 150 | 150 |
| Light stabilizer | Eversorb HP-1 | 1.7 | 1.7 | 1.7 | 1.7 |
| | Eversorb HP-4 | 3 | 3 | 3 | 3 |
| Antioxidant | Irganox 245FF | 1 | 1 | 1 | 1 |
| Dehydrating agent | Dynasylan VTMO | 5 | 5 | 5 | 5 |
| Aminosilane | Dynasylan DAMO | | | 5.2 | 3.2 |
| Silane compound (C) | Dynasylan OCTMO | 7 | 9 | 7 | 9 |
| Silane compound (D) | Dynasylan 1146 | 5.2 | 3.2 | | |
| Catalyst | TIB KAT223 | 4 | 4 | 4 | 4 |
| Water-resistant adhesion evaluation (hand peel) | Water-resistant adhesion evaluation 1 | C | C | D | D |
| | Water-resistant adhesion evaluation 2 | C | C | D | D |
| Water absorption rate after 4-week immersion (%) | | 2.5 | 2.1 | 5.8 | 3.6 |

Table 2 reveals that Comparative Examples 4 and 5, in which the silane compound (D) was replaced with an aminosilane, showed an adhesive failure rate of 100% in all of the water-resistant adhesion evaluations, while Examples 4 and 5, in which all of the silica (B), silane compound (C), and silane compound (D) were contained, exhibited cohesive failure indicative of improved water-resistant adhesion. It is also seen that Examples 4 and 5 showed lower water absorption rates than Comparative Examples 4 and 5.

### (Synthesis Example 3)

To 500 g of the polymer (Q-1) obtained in Synthesis Example 1 was added 50 µl of a solution of a platinum-divinyldisiloxane complex (isopropanol solution with a concentration of 3% by weight calculated as the platinum content), and then 9.5 g of trimethoxysilane was slowly added dropwise under stirring. The resulting liquid mixture was reacted at 100°C for 2 hours, after which trimethoxysilane remaining unreacted was distilled off under reduced pressure to obtain polyoxypropylene (A-3) having a plurality of trimethoxysilyl groups at polymer ends and having a number-average molecular weight of 28,000. The polymer (A-3) was found to have 1.7 trimethoxysilyl groups on average per polymer end and 3.4 trimethoxysilyl groups on average per polymer molecule.

### (Synthesis Example 4)

Sodium methoxide dissolved in methanol at a concentration of 28% was added to the hydroxy-terminated polyoxypropylene (P-2) obtained in Synthesis Example 2 in an amount of 1.0 molar equivalents per molar equivalent of the hydroxy groups of the polyoxypropylene (P-2). Methanol was distilled off by evaporation under vacuum, then 1.0 molar equivalents of allyl glycidyl ether was added per molar equivalent of the hydroxy groups of the polymer (P-2), and the reaction was allowed to proceed at 130°C for 2 hours. After that, 0.28 molar equivalents of sodium methoxide dissolved in methanol was added, then methanol was removed, and 1.8 molar equivalents of allyl chloride was added to convert the terminal hydroxy groups to allyl groups. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-3) having a plurality of unsaturated carbon-carbon bonds at polymer ends was obtained. The polymer (Q-3) was found to have 2.0 introduced unsaturated carbon-carbon bonds on average per polymer end.

To 500 g of the obtained polymer (Q-3) was added 50 µl of a solution of a platinum-divinyldisiloxane complex (isopropanol solution with a concentration of 3% by weight calculated as the platinum content), and then 18.2 g of dimethoxymethylsilane was slowly added dropwise under stirring. The resulting liquid mixture was reacted at 100°C for 2 hours, after which dimethoxymethylsilane remaining unreacted was distilled off under reduced pressure to obtain polyoxypropylene (A-4) having a plurality of dimethoxymethylsilane groups at polymer ends and having a number-average molecular weight of 14,500. The polymer (A-4) was found to have 1.6 dimethoxymethylsilyl groups on average per polymer end and 3.2 dimethoxymethylsilyl groups on average per polymer molecule.

### (Example 6)

To 100 parts by weight of the polymer (A-3) described in Synthesis Example 3 were added 75 parts by weight of DINP, 100 parts by weight of Sibelite M3000, 200 parts by weight of Imerseal 36S, 1.7 parts by weight of Tinuvin 770 (manufactured by BASF: light stabilizer), 3 parts by weight of Tinuvin 326 (manufactured by BASF: light stabilizer), 1 part by weight of Irganox 245FF, 5 parts by weight of Dynasylan VTMO, 3.2 parts by weight of Dynasylan 1146, 7 parts by weight of Dynasylan OCTMO, 2 parts by weight of Dynasylan GLYMO, and 0.4 parts by weight of TIB KAT223. The mixture was thoroughly stirred with a spatula and then further stirred and defoamed uniformly using a planetary mixer to obtain a curable composition. The obtained curable composition was used to conduct the same water-resistant adhesion evaluations as in Example 1. Additionally, the water absorption rate of the curable composition was measured as described below. The results are listed in Table 3.

### (Water Absorption Rate)

The curable composition obtained as above was used to prepare a 2-mm-thick sheet, which was aged at 23°C for 3 days and then at 50°C for 4 days. Two samples with a size of 5 × 5 cm were cut out of the aged sheet. The two samples were weighed and then immersed in water at 50°C for 4 days. After the samples were taken out of water, water was removed from the surfaces of the samples with paper, and then the weight of each sample was measured. The water absorption rate [(weight of sample as measured after water immersion - weight of sample as measured before water immersion)/weight of sample as measured before water immersion × 100] was determined for each sample, and the average of the water absorption rates of the two samples was calculated.

### (Comparative Example 6)

Evaluations were conducted in the same manner as in Example 6, except that Dynasylan OCTMO and Dynasylan GLYMO were not added. The results are listed in Table 3.

### (Comparative Example 7)

Evaluations were conducted in the same manner as in Example 6, except that Dynasylan OCTMO and Dynasylan GLYMO were not added and the amount of TIB KAT223 was changed to 4 parts by weight. The results are listed in Table 3.

**[Table 3]**

| | | Example 6 | Comp. Example 6 | Comp. Example 7 |
|---|---|---|---|---|
| Polymer (A) | A-3 | 100 | 100 | |
| | A-4 | | | 100 |
| Plasticizer | DINP | 75 | 75 | 75 |
| Silica (B) | Sibelite M3000 | 100 | 100 | 100 |
| Calcium carbonate | Imerseal 36S | 200 | 200 | 200 |
| Light stabilizer | Tinuvin 770 | 1.7 | 1.7 | 1.7 |
| | Tinuvin 326 | 3 | 3 | 3 |
| Antioxidant | Irganox 245FF | 1 | 1 | 1 |
| Dehydrating agent | Dynasylan VTMO | 5 | 5 | 3 |
| Silane compound (C) | Dynasylan OCTMO | 7 | | |
| Silane compound (D) | Dynasylan 1146 | 3.2 | 3.2 | 3.2 |
| Epoxysilane (E) | Dynasylan GLYMO | 2 | | |
| Catalyst | TIB KAT223 | 0.4 | 0.4 | 4 |
| Water-resistant adhesion evaluation (hand peel) | Water-resistant adhesion evaluation 1 | D | D | D |
| | Water-resistant adhesion evaluation 2 | C | D | D |
| Water absorption rate after 4-day immersion (%) | | 1.1 | 1.7 | 3.4 |

Table 3 reveals that Example 6, in which all of the silica (B), silane compound (C), and silane compound (D) were contained, exhibited higher water-resistant adhesion than Comparative Examples 6 and 7 in which the silane compound (C) was not contained, and showed a lower water absorption rate than Comparative Example 6.

### (Synthesis Example 5)

Propylene oxide was polymerized using polyoxypropylene triol having a number-average molecular weight of about 4,500 as an initiator in the presence of a zinc hexacyanocobaltate-glyme complex catalyst. This polymerization yielded polyoxypropylene (P-3) terminated by hydroxy groups and having a number-average molecular weight of 24,600 and a polydispersity index Mw/Mn of 1.31. Subsequently, 1.2 molar equivalents of sodium methoxide dissolved in methanol at a concentration of 28% was added per molar equivalent of the hydroxy groups of the hydroxy-terminated polyoxypropylene (P-3). Methanol was distilled off by evaporation under vacuum, and then 1.5 molar equivalents of allyl chloride was added per molar equivalent of the hydroxy groups of the hydroxy-terminated polymer to convert the terminal hydroxy groups to allyl groups. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-4) having allyl groups at polymer ends was obtained. To 500 g of the polymer (Q-4) was added 50 µl of a solution of a platinum-divinyldisiloxane complex (isopropanol solution with a concentration of 3% by weight calculated as the platinum content), and then 6.9 g of trimethoxysilane was slowly added dropwise under stirring. The resulting liquid mixture was reacted at 90°C for 2 hours, after which trimethoxysilane remaining unreacted was distilled off under reduced pressure to obtain polyoxypropylene (A-5) having trimethoxysilyl groups and having a number-average molecular weight of 26,200. The polymer (A-5) was found to have 0.7 trimethoxysilyl groups on average per polymer end and 2.1 trimethoxysilyl groups on average per polymer molecule.

### (Synthesis Example 6)

Propylene oxide was polymerized using polyoxypropylene triol having a number-average molecular weight of about 4,500 as an initiator in the presence of a zinc hexacyanocobaltate-glyme complex catalyst. This polymerization yielded polyoxypropylene (P-4) terminated by hydroxy groups and having a number-average molecular weight of 16,400 and a polydispersity index Mw/Mn of 1.31. Subsequently, 1.2 molar equivalents of sodium methoxide dissolved in methanol at a concentration of 28% was added per molar equivalent of the hydroxy groups of the hydroxy-terminated polyoxypropylene (P-4). Methanol was distilled off by evaporation under vacuum, and then 1.5 molar equivalents of allyl chloride was added per molar equivalent of the hydroxy groups of the polymer (P-4) to convert the terminal hydroxy groups to allyl groups. Allyl chloride remaining unreacted was removed by evaporation under reduced pressure. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-5) having allyl groups at polymer ends was obtained. To 500 g of the polymer (Q-5) was added 50 µl of a solution of a platinum-divinyldisiloxane complex (isopropanol solution with a concentration of 3% by weight calculated as the platinum content), and then 10.9 g of trimethoxysilane was slowly added dropwise under stirring. The resulting liquid mixture was reacted at 100°C for 2 hours, after which trimethoxysilane remaining unreacted was distilled off under reduced pressure to obtain polyoxypropylene (A-6) having trimethoxysilyl groups at polymer ends and having a number-average molecular weight of about 16,400. The polymer (A-6) was found to have 0.7 trimethoxysilyl groups on average per polymer end and 2.2 trimethoxysilyl groups on average per polymer molecule.

### (Synthesis Example 7)

Sodium methoxide dissolved in methanol at a concentration of 28% was added to the hydroxy-terminated polyoxypropylene (P-1) obtained in Synthesis Example 1 in an amount of 1.0 molar equivalents per molar equivalent of the hydroxy groups of the polyoxypropylene (P-1). Methanol was distilled off by evaporation under vacuum, and then 1.79 molar equivalents of allyl chloride was added per molar equivalent of the hydroxy groups of the hydroxy-terminated polyoxypropylene to convert the terminal hydroxy groups to allyl groups. The resulting unpurified polyoxypropylene was mixed and stirred with n-hexane and water, and then water was removed by centrifugation. Hexane was evaporated from the resulting hexane solution under reduced pressure, and thus the metal salt was removed from the polymer. In this manner, polyoxypropylene (Q-6) having allyl groups at polymer ends was obtained. To 500 g of the polymer (Q-6) was added 50 µl of a solution of a platinum-divinyldisiloxane complex (isopropanol solution with a concentration of 3% by weight calculated as the platinum content), and then 5.4 g of trimethoxysilane was slowly added dropwise under stirring. The resulting liquid mixture was reacted at 90°C for 2 hours, after which trimethoxysilane remaining unreacted was distilled off under reduced pressure to obtain polyoxypropylene (A-7) having trimethoxysilyl groups and having a number-average molecular weight of 28,500. The polymer (A-7) was found to have 0.8 trimethoxysilyl groups on average per polymer end and 1.6 trimethoxysilyl groups on average per polymer molecule.

### (Examples 7 to 9)

To 100 parts by weight of each of the polymers listed in Table 4 were added 75 parts by weight of DINP, 100 parts by weight of Sibelite M3000, 200 parts by weight of Imerseal 36S, 1.7 parts by weight of Tinuvin 770 (manufactured by BASF: light stabilizer), 3 parts by weight of Tinuvin 326 (manufactured by BASF: light stabilizer), 1 part by weight of Irganox 245FF, 5 parts by weight of Dynasylan VTMO, 3.2 parts by weight of Dynasylan 1146, 7 parts by weight of Dynasylan OCTMO, 2 parts by weight of Dynasylan GLYMO, and 0.5 parts by weight of TIB KAT223. The mixture was thoroughly stirred with a spatula and then further stirred and defoamed uniformly using a planetary mixer to obtain a curable composition. The obtained curable composition was used to conduct the same evaluations as in Example 1. The results are listed in Table 4.

**[Table 4]**

| | | Example 7 | Example 8 | Example 9 |
|---|---|---|---|---|
| Polymer (A) | A-5 | 100 | | |
| | A-6 | | 100 | |
| | A-7 | | | 100 |
| Plasticizer | DINP | 75 | 75 | 75 |
| Silica (B) | Sibelite M3000 | 100 | 100 | 100 |
| Calcium carbonate | Imerseal 36S | 200 | 200 | 200 |
| Light stabilizer | Tinuvin 770 | 1.7 | 1.7 | 1.7 |
| | Tinuvin 326 | 3 | 3 | 3 |
| Antioxidant | Irganox 245FF | 1 | 1 | 1 |
| Dehydrating agent | Dynasylan VTMO | 5 | 5 | 5 |
| Silane compound (C) | Dynasylan OCTMO | 7 | 7 | 7 |
| Silane compound (D) | Dynasylan 1146 | 3.2 | 3.2 | 3.2 |
| Epoxysilane (E) | Dynasylan GLYMO | 2 | 2 | 2 |
| Catalyst | TIB KAT223 | 0.5 | 0.5 | 0.5 |
| Water-resistant adhesion evaluation (hand peel) | Water-resistant adhesion evaluation 1 | C | C | C |
| | Water-resistant adhesion evaluation 2 | B | B | B |
| Water absorption rate after 4-week immersion (%) | | 1.5 | 1.4 | 1.5 |

Table 4 reveals that Examples 7 to 9, in which all of the silica (B), silane compound (C), and silane compound (D) were contained, exhibited good water-resistant adhesion and showed low water absorption rates.

## Claims

1. A curable composition comprising:
a hydrolyzable silyl group-containing polyoxyalkylene polymer (A);
silica (B);
a silane compound (C) containing an alkyl group having four or more carbon atoms; and
a compound (D) resulting from partial condensation of silyl groups of an aminosilane alone or partial condensation of the aminosilane with an alkoxysilane compound other than aminosilanes.

2. The curable composition according to claim 1, further comprising an epoxysilane (E).

3. The curable composition according to claim 1 or 2, wherein the silane compound (C) containing an alkyl group having four or more carbon atoms is a silane compound containing an alkyl group having seven or more carbon atoms.

4. The curable composition according to any one of claims 1 to 3, wherein the hydrolyzable silyl group-containing polyoxyalkylene polymer (A) has a hydrolyzable silyl group represented by the following formula (1):
-Si(R¹)₃₋ₐ(X)ₐ (1),
wherein
each R¹ independently represents a hydrocarbon group having 1 to 10 carbon atoms and optionally having a heteroatom-containing group or a halogen atom as a substituent, each X independently represents a hydroxy group or a hydrolyzable group, and a represents 1, 2, or 3.

5. The curable composition according to claim 4, wherein a represents 3.

6. The curable composition according to any one of claims 1 to 5, wherein the aminosilane has a hydrolyzable silyl group.

7. The curable composition according to any one of claims 1 to 6, wherein the hydrolyzable silyl group-containing polyoxyalkylene polymer (A) has a number-average molecular weight of 3,000 to 50,000 as determined by GPC as a polystyrene equivalent molecular weight.

8. The curable composition according to any one of claims 1 to 7, comprising 10 to 300 parts by weight of the silica (B), 0.5 to 20 parts by weight of the silane compound (C) containing an alkyl group having four or more carbon atoms, and 0.5 to 20 parts by weight of the compound (D) resulting from partial condensation of silyl groups of an aminosilane alone or partial condensation of the aminosilane with an alkoxysilane compound other than aminosilanes, per 100 parts by weight of the hydrolyzable silyl group-containing polyoxyalkylene polymer (A).

9. A cured product obtained by curing the curable composition according to any one of claims 1 to 8.

10. A waterproofing coating material for concrete, comprising the curable composition according to any one of claims 1 to 8.

## Patentansprüche

1. Eine härtbare Zusammensetzung, umfassend:
ein hydrolysierbare Silylgruppen enthaltendes Polyoxyalkylenpolymer (A);
Siliciumdioxid (B);
eine Silanverbindung (C), die eine Alkylgruppe mit vier oder mehr Kohlenstoffatomen enthält; und
eine Verbindung (D), die aus einer Teilkondensation von Silylgruppen eines Aminosilans allein oder einer Teilkondensation des Aminosilans mit einer von Aminosilanen verschiedenen Alkoxysilanverbindung resultiert.

2. Die härtbare Zusammensetzung nach Anspruch 1, ferner umfassend ein Epoxysilan (E).

3. Die härtbare Zusammensetzung nach Anspruch 1 oder 2, wobei die Silanverbindung (C), die eine Alkylgruppe mit vier oder mehr Kohlenstoffatomen enthält, eine Silanverbindung ist, die eine Alkylgruppe mit sieben oder mehr Kohlenstoffatomen enthält.

4. Die härtbare Zusammensetzung nach einem der Ansprüche 1 bis 3, wobei das hydrolysierbare Silylgruppen enthaltende Polyoxyalkylenpolymer (A) eine hydrolysierbare Silylgruppe, dargestellt durch die folgende Formel (1), aufweist:
-Si(R¹)₃₋ₐ(X)ₐ (1),
wobei
jedes R¹ unabhängig eine Kohlenwasserstoffgruppe mit 1 bis 10 Kohlenstoffatomen und gegebenenfalls mit einer heteroatomhaltigen Gruppe oder einem Halogenatom als Substituenten darstellt, jedes X unabhängig eine Hydroxygruppe oder eine hydrolysierbare Gruppe darstellt und a für 1, 2 oder 3 steht.

5. Die härtbare Zusammensetzung nach Anspruch 4, wobei a für 3 steht.

6. Die härtbare Zusammensetzung nach einem der Ansprüche 1 bis 5, wobei das Aminosilan eine hydrolysierbare Silylgruppe aufweist.

7. Die härtbare Zusammensetzung nach einem der Ansprüche 1 bis 6, wobei das hydrolysierbare Silylgruppen enthaltende Polyoxyalkylenpolymer (A) ein Zahlenmittel des Molekulargewichts von 3.000 bis 50.000 aufweist, wie durch GPC als Polystyroläquivalent-Molekulargewicht bestimmt.

8. Die härtbare Zusammensetzung nach einem der Ansprüche 1 bis 7, umfassend 10 bis 300 Gewichtsteile des Siliciumdioxids (B), 0,5 bis 20 Gewichtsteile der Silanverbindung (C), die eine Alkylgruppe mit vier oder mehr Kohlenstoffatomen enthält, und 0,5 bis 20 Gewichtsteile der Verbindung (D), die aus einer Teilkondensation von Silylgruppen eines Aminosilans allein oder einer Teilkondensation des Aminosilans mit einer von Aminosilanen verschiedenen Alkoxysilanverbindung resultiert, pro 100 Gewichtsteile des hydrolysierbare Silylgruppen enthaltenden Polyoxyalkylenpolymers (A).

9. Ein gehärtetes Produkt, erhalten durch Härten der härtbaren Zusammensetzung nach einem der Ansprüche 1 bis 8.

10. Ein abdichtendes Beschichtungsmaterial für Beton, umfassend die härtbare Zusammensetzung nach einem der Ansprüche 1 bis 8.

## Revendications

1. Composition durcissable comprenant :
un polymère de polyoxyalkylène contenant un groupe silyle hydrolysable (A) ;
de la silice (B) ;
un composé silane (C) contenant un groupe alkyle ayant quatre atomes de carbone ou plus ; et
un composé (D) résultant de la condensation partielle de groupes silyles d'un aminosilane seul ou de la condensation partielle de l'aminosilane avec un composé alcoxysilane autre que les aminosilanes.

2. Composition durcissable selon la revendication 1, comprenant en outre un époxysilane (E).

3. Composition durcissable selon la revendication 1 ou 2, dans laquelle le composé silane (C) contenant un groupe alkyle ayant quatre atomes de carbone ou plus est un composé silane contenant un groupe alkyle ayant sept atomes de carbone ou plus.

4. Composition durcissable selon l'une quelconque des revendications 1 à 3, dans laquelle le polymère de polyoxyalkylène contenant un groupe silyle hydrolysable (A) a un groupe silyle hydrolysable représenté par la formule (1) suivante :
-Si(R¹)₃₋ₐ(Xₐ) (1),
dans laquelle
chaque R¹ représente indépendamment un groupe hydrocarboné ayant 1 à 10 atomes de carbone et ayant éventuellement un groupe contenant un hétéroatome ou un atome d'halogène en tant que substituant, chaque X représente indépendamment un groupe hydroxy ou un groupe hydrolysable, et a représente 1, 2 ou 3.

5. Composition durcissable selon la revendication 4, dans laquelle a représente 3.

6. Composition durcissable selon l'une quelconque des revendications 1 à 5, dans laquelle l'aminosilane a un groupe silyle hydrolysable.

7. Composition durcissable selon l'une quelconque des revendications 1 à 6, dans laquelle le polymère de polyoxyalkylène contenant un groupe silyle hydrolysable (A) a une masse moléculaire moyenne en nombre de 3 000 à 50 000, telle que déterminée par GPC sous la forme d'une masse moléculaire en équivalent polystyrène.

8. Composition durcissable selon l'une quelconque des revendications 1 à 7, comprenant 10 à 300 parties en poids de la silice (B), 0,5 à 20 parties en poids du composé silane (C) contenant un groupe alkyle ayant quatre atomes de carbone ou plus, et 0,5 à 20 parties en poids du composé (D) résultant de la condensation partielle de groupes silyles d'un aminosilane seul ou de la condensation partielle de l'aminosilane avec un composé alcoxysilane autre que les aminosilanes, pour 100 parties en poids du polymère de polyoxyalkylène contenant un groupe silyle hydrolysable (A).

9. Produit durci obtenu par durcissement de la composition durcissable selon l'une quelconque des revendications 1 à 8.

10. Matériau de revêtement imperméabilisant pour béton, comprenant la composition durcissable selon l'une quelconque des revendications 1 à 8.
